Europäisches Patentamt

European Patent Office

Office européen des brevets

(19)

(11) Veröffentlichungsnummer: **0 065 106**
**B1**

(12) # EUROPÄISCHE PATENTSCHRIFT

(45) Veröffentlichungstag der Patentschrift:
31.07.85

(51) Int. Cl.⁴: **B 01 D 11/02, A 23 L 1/00**

(21) Anmeldenummer: **82103148.1**

(22) Anmeldetag: **14.04.82**

(54) **Verfahren zur Herstellung von konzentrierten Extrakten aus frischen Pflanzen oder Teilen davon, insbesondere frischen Küchenkräutern.**

(30) Priorität: **15.05.81 DE 3119454**

(43) Veröffentlichungstag der Anmeldung:
**24.11.82 Patentblatt 82/47**

(45) Bekanntmachung des Hinweises auf die Patenterteilung:
**31.07.85 Patentblatt 85/31**

(84) Benannte Vertragsstaaten:
**AT BE CH DE FR GB IT LI NL**

(56) Entgegenhaltungen:
**EP - A - 0 023 680
DE - A - 2 212 281
DE - A - 2 709 033
US - A - 3 966 981**

(73) Patentinhaber: **SKW Trostberg Aktiengesellschaft,
Dr.-Albert-Frank-Strasse 32 Postfach 1150/1160,
D-8223 Trostberg (DE)**
Patentinhaber: **HAARMANN & REIMER GMBH,
Postfach 138, D-3450 Holzminden (DE)**

(72) Erfinder: **Schütz, Erwin, Dr., Steiner Strasse 22,
D-8221 Palling (DE)**
Erfinder: **Vollbrecht, Heinz-Rüdiger, Dr.,
Herzog-Nikolaus-Strasse 15, D-8221 Stein/Traun (DE)**
Erfinder: **Sandner, Klaus, Gabelsbergerstrasse 1,
D-8223 Trostberg (DE)**
Erfinder: **Sand, Theodor, Dr., Vogelsang 3,
D-3450 Holzminden (DE)**
Erfinder: **Mühlnickel, Peter, Pipping 4c,
D-3450 Holzminden (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft ein Verfahren zur Herstellung von konzentrierten pflanzlichen Geruchs- und Geschmacksstoffextrakten durch Extraktion mit Kohlendioxid bei überkritischem Druck und Abscheidung des konzentrierten Extraktes bei unterkritischem Druck und unterkritischer Temperatur. Ein solches Verfahren ist aus der EP-A-23 680 bekannt, das zweistufig durchgeführt wird.

Eine Möglichkeit zur Konzentrierung und Haltbarmachung der Inhaltsstoffe frischer pflanzlicher Stoffe, die Extraktion mit wasserunlöslichen Lösemitteln, wie z. B. Hexan oder Dichlormethan, gelingt deshalb nicht, weil es nicht möglich ist, die eigentlich als Lösemittel für die unpolaren Inhaltsstoffe gut geeigneten organischen Extraktionsmittel mit den stark wasserhaltigen Pflanzenmaterialien in ausreichendem Maß in den zur Extraktion notwendigen innigen Kontakt zu bringen, d. h. diese zu benetzen, weshalb die Ausbeuten bei derartigen Verfahren unbefriedigend sind. Wohl ist es möglich, zur Extraktion getrockneter Pflanzen lipophile oranische Lösemittel einzusetzen. Diesem Verfahren haftet jedoch der Nachteil an, daß bei der Trocknung der Pflanzen, z. B. wesentliche Aromen- oder Geruchsbestandteile verlorengehen und demzufolge in den Extrakten fehlen.

Bekannt ist, daß man aus einigen Pflanzen durch Wasserdampfdestillation die entsprechenden etherischen Öle gewinnen kann. Diese vermitteln jedoch das Aroma- oder Geruchsbild der frischen Pflanze nur unvollständig, da sie nur den flüchtigen Teil der Inhaltsstoffe umfassen und durch die thermische Belastung bei ihrer Herstellung verändert werden.

Küchenkräuter werden sowohl in frischer Form als auch in getrocknetem Zustand zum Würzen von Speisen verwendet. Es ist bekannt, daß bei der Trocknung frischer Kräuter wesentliche, das Geschmacksbild der frischen Kräuter bestimmende Bestandteile teilweise oder vollständig verlorengehen. Zur Haltbarmachung der erwünschten geschmacklichen Eigenschaften frischer Küchenkräuter ist man dazu übergegangen, diese durch Tiefgefrieren lagerfähig zu machen. Eine weitere Möglichkeit zur Nutzung und Haltbarmachung der Geschmacksbestandteile von Frischkräutern wie z. B. Dill, Estragon, Zwiebeln etc. besteht darin, aus den frischen Kräutern alkoholische oder essigsaure Auszüge herzustellen. Die Auszüge entsprechen oft dem Geschmacksbild der frischen Kräuter recht gut und werden z. T. in der Sauerkonserven-Industrie in großem Rahmen eingesetzt. Ein Nachteil dieser Auszüge besteht darin, daß die geschmacksbestimmenden Prinzipien in diesen Auszügen in hoher Verdünnung vorliegen. Ein Aufkonzentrieren der stets zu einem gewissen Teil Wasser enthaltenden Auszüge z. B. durch Abdestillieren des wasserhaltigen Lösemittels führt nicht zu dem gewünschten Ergebnis, da durch die hohen dazu erforderlichen Temperaturen das ursprüngliche Geschmacksbild zerstört wird.

Aus der DE-C-21 27 611 ist es bekannt, Gewürzextrakte mit natürlicher Zusammensetzung durch Extraktion mit einem gesundheitlich unbedenklichen Gas, wie Kohlendioxid in überkritischem Zustand als Lösemittel zu gewinnen, indem nacheinander die ätherischen Öle mit trockenem und die Geschmacksstoffe mit feuchtem überkritischem Gas extrahiert und die Extrakte durch Druck- und/oder Temperaturänderung abgeschieden und miteinander vermischt werden. Bei diesem Verfahren werden jedoch als Ausgangsmaterialien lufttrockne Gewürze eingesetzt, wie Pfeffer, Gewürznelken, Stangenkaneel oder Vanilleschoten. In dieser Druckschrift wird darauf hingewiesen, daß die Extraktion auch mit einem flüssigen Gas, wie beispielsweise Kohlendioxid unterhalb seines kritischen Druckes und seiner kritischen Temperatur möglich ist, daß jedoch die Löslichkeit der Aromabestandteile unter überkritischen Bedingungen um ein Vielfaches größer ist als bei Verwendung des entsprechenden Lösemittels in flüssigem Zustand. Wesentlich ist jedoch die zweistufige Verfahrensweise, bei der in erster Stufe mit einem trockenen und in der zweiten Stufe mit einem feuchten überkritischen Fluid extrahiert wird.

Aus der DE-C-21 27 618 ist weiterhin ein Verfahren zur Gewinnung von Hopfenextrakten durch Extraktion von lufttrockenem Hopfen mit beispielsweise Kohlendioxid unter überkritischen Bedingungen beschrieben, wobei der erhaltene Extrakt durch Senken des Druckes auf einen unterkritischen Wert abgeschieden wird, und die angewandte Temperatur oberhalb oder unterhalb der kritischen Temperatur des Kohlendioxids liegen kann. Auch bei dieser Verfahrensweise ist es jedoch erforderlich, den zu extrahierenden Hopfen zuvor zu trocknen, um einen lufttrockenen Hopfen zu gewinnen, was erhebliche Nachteile mit sich bringt, namentlich eine Verfälschung der Geschmacks- bzw. der Aromaeigenschaften des gewonnenen Extrakts.

In der DD-A-41 362 ist ganz allgemein ein Verfahren zur Auftrennung von unter Verfahrensbedingungen flüssigen und/oder festen Stoffgemischen, die organische Verbindungen und/oder organische Gruppen aufweisende Verbindungen enthalten, beschrieben, das darin besteht, daß man das Stoffgemisch mit einem unter überkritischen Bedingungen der Temperatur und des Druckes stehenden Gas behandelt, das beladene Gas unter überkritischen Bedingungen von dem Rückstand abtrennt und anschließend die in der überkritischen Gasphase aufgenommenen Verbindungen durch Temperaturerhöhung und/oder Druckerniedrigung zurückgewinnt. Als Gas kann man hierbei unter anderem Kohlendioxid verwenden. Diese Druckschrift lehrt jedoch nicht ein Verfahren zur Herstellung von konzentrierten Extrakten aus frischen Pflanzen oder Pflanzenteilen. Es ist lediglich angegeben, daß man mit Hilfe eines überkritischen Gases, dem leichter flüchtige organische Verbindungen zugesetzt sind, Chlorophyll aus zerkleinerten Pflanzenteilen herauslösen kann.

Die DE-A-28 01 843 offenbart ein Verfahren zur Herstellung eines Hopfenextrakts, das darin besteht, flüssiges Kohlendioxid bei einer Temperatur von minus 5 bis plus 15°C durch eine Säule von Hopfenmaterial zu leiten, und den hierdurch gewonnenen Hopfenextrakt hoher Reinheit zu gewinnen. In der Beschreibungseinleitung dieser Druckschrift ist angegeben, daß aus der GB-A-13 88 581 bereits ein Verfahren zur Herstellung eines Hopfenextrakts durch Extrahieren von Hopfen mit verschiedenen Gasen in überkritischem Zustand bezüglich Temperatur und Druck bekannt sei, wobei Kohlendioxid als das am meisten bevorzugte Gas bezeichnet wird. Es wird jedoch angegeben, daß der nach dieser Verfahrensweise erhaltene Extrakt ohne sorgfältige Reinigung nicht geeignet ist, da er einen nachteiligen Geschmack aufweist. Dabei würde die notwendige Reinigung die Verwendung von organischen Lösungsmitteln erfordern, wobei einer der Hauptvorteile der Verwendung von überkritischem Kohlendioxid bei der Extraktion von Hopfen, nämlich die Abwesenheit von Lösungsmittelresten aufgegeben würde.

Der vorliegenden Erfindung liegt daher die Aufgabe zugrunde, ein Verfahren zur Herstellung eines konzentrierten Extraktes aus frischen Pflanzen oder Teile davon, insbesondere frischen Küchenkräutern durch Extraktion mit Kohlendioxid bei überkritischem Druck anzugeben, bei dem durch eine einstufige Extraktion eine vollständige Isolierung der Geruchs- und Aromastoffe, insbesondere der leicht flüchtigen Komponenten erreicht wird und ein Extrakt gewonnen wird, der im Gegensatz zu den herkömmlichen Verfahrensweisen keine Beeinträchtigung seines Geruchs- und Geschmackbildes zeigt.

Diese Aufgabe wird gelöst durch das im Anspruch beschriebene Verfahren.

Es hat sich überraschenderweise gezeigt, daß bei Anwendung dieser Verfahrensbedingungen die Inhaltsstoffe frischer Pflanzen durch eine einstufige Extraktion vollständig und in originaler Zusammensetzung quantitativ gewonnen werden können.

Die Extraktion wurde bei einer Temperatur von nicht mehr als 9°C oberhalb der kritischen Temperatur des Kohlendioxids von 31°C durchgeführt, während man bei der Abscheidung eine Temperatur deutlich unterhalb der kritischen Temperatur anwendet, die vorzugsweise nicht wesentlich höher als 20°C liegt. Erfindungsgemäß ist es besonders bevorzugt, die Extraktion bei einer Temperatur von 0 bis 40°C und noch bevorzugter von 0 bis 31°C durchzuführen und bei der Abscheidung eine Temperatur von −20 bis +31°C, vorzugsweise von 0 bis 20°C anzuwenden.

Man setzt bei der Extraktion Pflanzen oder Teile davon ein, die einen Wassergehalt von 30% oder mehr aufweisen, so daß in der Regel eine Vortrocknung des Materials nicht notwendig ist und allenfalls eine mechanische Abtrennung des Wassers durch beispielsweise Zentrifugieren bewirkt werden kann.

Bei einer bevorzugten Ausführungsform des erfindungsgemäßen Verfahrens bewirkt man die Extraktion bei einem Druck von dem kritischen Druck (73,8 bar) bis 300 bar, vorzugsweise bei einem Druck von etwa 80 bis 200 bar. Bezüglich der Abscheidung des Extraktes ist es erfindungsgemäß bevorzugt, diese bei einem Druck von 20 bis 60 bar zu bewirken.

Gemäß einer weiteren bevorzugten Ausführungsform des erfindungsgemäßen Verfahrens ist es möglich, den gewonnenen Extrakt durch Behandlung mit einem flüchtigen Lösungsmittel, beispielsweise einem mit Wasser nicht mischbaren Lösungsmittel, wie beispielsweise Ether oder Pentan, von Wasser zu befreien.

Die erfindungsgemäße Extraktion wird zweckmäßig in Form eines Kreisprozesses durchgeführt, bei dem das Kohlendioxid zunächst den Extraktionsbehälter durchströmt, bei dem es sich um ein Druckgefäß handelt, das bei einem Druck von 74 bis 300 bar, vorzugsweise bei einem Druck von 74 bis 200 bar, noch bevorzugter bei einem Druck von 80 bis 200 bar und einer Temperatur von unterhalb 40°C und noch bevorzugter bei einer Temperatur von 0 bis 31°C betrieben wird. Die Abscheidung des Extraktes aus der in dem Extraktionsbehälter erhaltenen Lösung erfolgt in einem nachgeschalteten Abscheidegefäß, in dem die Abscheidung durch Absenken des Druckes auf unterkritische Werte, d. h. unterhalb 74 bar, vorzugsweise auf 20 bis 60 bar bei Temperaturen, die unterhalb der kritischen Temperatur von 31°C liegen, erfolgt. Das bei der Abscheidung des Extraktes freigesetzten Kohlendioxid wird anschließend erneut zur Extraktion eingesetzt.

Das erfindungsgemäße Verfahren eignet sich besonders gut für die Extraktion von frischen Kräutern, deren Aroma in Nahrungsmitteln erwünscht ist, wie z. B. Dill, Estragon, Majoran, Kerbel, Basilikum, Bohnenkraut, Petersilie, Sellerieblätter, Thymian, Rosmarin, Salbei, Fenchel, Liebstöckl und dergleichen, sowie für Pflanzen, die in frischem Zustand zum Würzen von Speisen eingesetzt werden, wie Schnittlauch, Zwiebeln, Porree, Knoblauch und dergleichen. Diese Kräuter, bzw. Pflanzen können frisch oder tiefgefroren, zerkleinert oder unzerkleinert zur Extraktion eingesetzt werden. Der Wassergehalt der frischen Kräuter kann bei 70 bis 85% liegen, kann aber auch durch geeignete Maßnahmen, wie z. B. durch Zentrifugieren auf etwa 30% abgesenkt werden.

Die erfindungsgemäße Verfahrensweise ist auch für die Extraktion anderer frischer Pflanzen geeignet, wie z. B. Cassisknospen, Mimosenblüten, Rosenblüten, Lavendel und dergleichen, in deren Extrakten der Erhalt des gesamten Geruchsbildes der frischen Pflanzenblüte bzw. Knospe erwünscht ist.

Die nach dem erfindungsgemäßen einstufigen Verfahren hergestellten Extrakte aus frischen Pflanzen besitzen überraschenderweisen den typischen Geruch und Geschmack der Ausgangsmaterialien, sind nahezu unbegrenzt haltbar und weisen darüber hinaus den Vorteil auf, daß sie praktisch keimfrei sind.

Es ist eine Eigenschaft der erhaltenen Extrakte, daß sie in mehr oder weniger großem Umfang Wasser enthalten, das aus den stark wasserhaltigen Kräutern mitextrahiert wird. Häufig ist bereits eine mechanische Abtrennung des Wassers z. B. durch Zentrifugieren möglich. In anderen Fällen ist eine vollständige Abtrennung des Wassers erwünscht. Dies kann z. B. dadurch erreicht werden, daß man den wasserhaltigen Extrakt in einem nicht mit Wasser mischbaren Lösemittel, wie z. B. Ether oder Pentan oder in einem anderen leicht flüchtigen Lösemittel aufnimmt, das Wasser abtrennt und anschließend das Lösemittel entfernt. Die Gewinnung wasserfreier Extrakte kann auch dadurch erreicht werden, daß man das mit Extrakt beladene Gas vor der Abscheidung mit Hilfe eines mit einem Trockenmittel befüllten Sorptionsfilters, der selektiv für Wasser wirkt, trocknet.

Das erfindungsgemäße Verfahren besitzt neben dem Vorteil, in einer einzigen Verfahrensstufe durchführbar zu sein, und einen konzentrierten Extrakt zu liefern, der ein vollständiges Aroma der frischen Pflanze wiedergibt, den Vorzug, die sonst bei den herkömmlichen Verfahrensweisen zur Trocknung der Kräuter erforderliche Wärmeenergie einzusparen, da die Extraktion mit erntefrischen Pflanzen erfolgen kann.

Beispiel 1

20 kg geschnittenes, frisches Dillkraut werden bei 120 bar und 25°C 1 h mit Kohlendioxid extrahiert. Der Extrakt wird durch Drucksenkung auf 40 bar bei 8°C abgeschieden. Es werden 1,6 kg gelblich-grüner wasserhaltiger Extrakt erhalten. Der Extrakt besitzt ein sehr intensives Aroma, das dem des frischen Dillkrautes entspricht. Das extrahierte Dillkraut ist praktisch geruchslos.

Beispiel 2 (Vergleichsbeispiel)

20 kg geschnittenes, frisches Dillkraut werden bei 160 bar und 45°C 1 h mit Kohlendioxid extrahiert. Der Extrakt wird durch Drucksenkung auf 60 bar bei 45°C abgeschieden. Es werden 0,7 kg gelblich-grüner wasserhaltiger Extrakt erhalten. Der Extrakt besitzt ein Aroma, das nur entfernte Ähnlichkeit mit dem Aroma des frischen Krautes besitzt. Im extrahierten Dillkraut überwiegt ein modriger Geruch.

Beispiel 3

650 g frische Estragonblätter werden zerkleinert und zentrifugiert, wobei 280 g Wasser abgetrennt werden. 360 g des solcherart behandelten Estragons werden 4 h mit Kohlendioxid bei 30°C extrahiert. Die Abscheidung des Extraktes wird bei 35 bar und 10°C vorgenommen. Es werden 16 g sehr intensiv nach Estragon riechender und schmeckender Extrakt gewonnen. Das extrahierte Gut ist praktisch geruchlos. Der Extrakt wird mit 2 · 20 ml iso-Pentan extrahiert und von Wasser abgetrennt. Nach Abdestillieren des Lösemittels verbleiben 1,5 kg Öl mit einem äußerst intensiven Estragonaroma.

Beispiel 4

12 kg zerkleinerte, frische Cassisknospen werden bei 122 bar und 26°C 1 h mit Kohlendioxid extrahiert. Der Extrakt wird durch Drucksenkung auf 38 bar bei 7°C abgeschieden. Es werden 0,7 kg eines gelblich-grünen Extraktes erhalten. Der Extrakt besitzt ein sehr intensives Aroma, das dem der frischen Cassisknospe entspricht. Der Extraktionsrückstand ist praktisch geruchlos.

Beispiel 5

15 kg zerkleinerte, frische Mimosenblüten werden bei 100 bar und 200°C 1 h mit Kohlendioxid extrahiert. Durch Drucksenkung auf 40 bar und Temperaturerniedrigung auf 10°C werden 1,2 kg wasserhaltiger Extrakt abgeschieden. Der Extrakt riecht intensiv nach Mimosen, während der Extraktionsrückstand praktisch geruchlos ist.

**Patentansprüche**

1. Verfahren zur Herstellung von konzentrierten pflanzlichen Geruchs- und Geschmacksstoffextrakten durch Extraktion mit Kohlendioxid bei überkritischem Druck und Abscheidung des konzentrierten Extraktes bei unterkritischem Druck und unterkritischer Temperatur, dadurch gekennzeichnet, daß man einen Wassergehalt von 30% oder mehr aufweisende Pflanzen oder Teile davon in einer Stufe bei 0°C bis 40°C extrahiert.

2. Verfahren nach Anspruch 1, dadurch gekennzeichnet, daß man die Extraktion bei einer Temperatur von 0 bis 31°C durchführt.

3. Verfahren nach den Ansprüchen 1 oder 2, dadurch gekennzeichnet, daß man die Extraktion bei einem Druck von 80 bis 200 bar durchführt.

4. Verfahren nach den Ansprüchen 1 bis 3, dadurch gekennzeichnet, daß man die Abscheidung des Extrakts bei einem Druck von 20 bis 60 bar bewirkt.

5. Verfahren nach den Ansprüchen 1 bis 4, dadurch gekennzeichnet, daß man die Abscheidung des Extrakts bei einer Temperatur von unterhalb 20°C durchführt.

6. Verfahren nach den Ansprüchen 1 bis 5, dadurch gekennzeichnet, daß man den Extrakt durch Behandeln mit einem flüchtigen Lösungsmittel von Wasser befreit.

**Claims**

1. Process for the production of concentrated vegetable odoriferous and flavouring material extracts by extraction with carbon dioxide at supercritical pressure and separation of the concentrated extract at subcritical pressure and subcritical temperature, characterised in that one extracts plants or parts thereof having a water content of 30% or more in one step at 0 to 40° C.

2. Process according to claim 1, characterised in that one carries out the extraction at a temperature of 0 ot 31° C.

3. Process according to claim 1 or 2, characterised in that one carries out the extraction at al pressure of 80 to 200 bar.

4. Process according to claims 1 to 3, characterised in that one brings about the separation of the extract at a pressure of 20 to 60 bar.

5. Process according to claims 1 to 4, characterised in that one carries out the separation of the extract at a temperature of below 20° C.

6. Process according to claims 1 to 5, characterised in that one frees the extract from water by treatment with a volatile solvent.

**Revendications**

1. Procédé pour obtenir des extraits concentrés en saveur et en arôme à partir de plantes, par extraction par le dioxyde de carbone à une pression supérieure à la pression critique, et séparation des extraits concentrés à une pression inférieure à la pression critique et à une température inférieure à la température critique, caractérisé en ce que l'on extrait une plante ou des extraits des celle-ci présentant une teneur en eau de 30% ou plus dans un domaine de températures de 0 à 40° C.

2. Procédé selon la revendication 1, caractérisé en ce que l'on effectue l'extraction à une température de 0 à 31° C.

3. Procédé selon les revendications 1 ou 2, caractérisé en ce que l'on effectue l'extraction à une pression de 80 à 200 bars.

4. Procédé selon les revendications 1 à 3, caractérisé en ce que la séparation de l'extrait se fait à une pression de 20 à 60 bars.

5. Procédé selon les revendications 1 à 4, caractérisé en ce que l'on effectue la séparation de l'extrait à une température inférieure à 20° C.

6. Procédé selon les revendications 1 à 5, caractérisé en ce qu'on libère l'extrait de l'eau par traitement avec un solvant fluide.